(19) Europäisches Patentamt
European Patent Office
Office européen des brevets

(11) **EP 4 501 871 A1**

(12) **EUROPEAN PATENT APPLICATION**
published in accordance with Art. 153(4) EPC

(43) Date of publication:
05.02.2025 Bulletin 2025/06

(21) Application number: 23826208.3

(22) Date of filing: 13.06.2023

(51) International Patent Classification (IPC):
*C03C 3/068* (2006.01)      *C03C 3/064* (2006.01)
*C03C 4/00* (2006.01)

(52) Cooperative Patent Classification (CPC):
C03B 19/02; C03C 1/00; C03C 3/064; C03C 3/068;
C03C 4/00; G02B 1/00

(86) International application number:
PCT/CN2023/099852

(87) International publication number:
WO 2023/246559 (28.12.2023 Gazette 2023/52)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 22.06.2022 CN 202210710069

(71) Applicant: CDGM Glass Co. Ltd.
Chengdu, Sichuan 610100 (CN)

(72) Inventor: KUANG, Bo
Chengdu, Sichuan 610100 (CN)

(74) Representative: Murgitroyd & Company
Murgitroyd House
165-169 Scotland Street
Glasgow G5 8PL (GB)

(54) **OPTICAL GLASS, OPTICAL ELEMENT AND OPTICAL INSTRUMENT**

(57) The present disclosure provides an optical glass including the following components in weight percentage: $SiO_2$: 20-45%; $B_2O_3$: 18-38%; $Nb_2O_5$: 5-25%; $ZrO_2$: 2-20%; and $Na_2O$: 1-15%. Due to the reasonable design for components, the optical glass of the present disclosure that has the desired refractive index and Abbe number can be obtained at a low cost, and moreover, the glass of the present disclosure exhibits a low relative partial dispersion ($P_{g,F}$) and a negative abnormal dispersion, thereby satisfying the application in high-end photo-electric products.

**Description**

**TECHNICAL FIELD**

The present disclosure relates to an optical glass, in particular to an optical glass with a refractive index of 1.56-1.66 and an Abbe number of 40-48, as well as an optical element and an optical instrument manufactured therefrom.

**BACKGROUND**

Optical glass is an important component in photoelectric products. In recent years, with the rapid development of photoelectric products such as smart phones, SLR cameras and security monitoring systems, higher requirements have been placed on the performance of optical glass. For example, in optical design, it is expected that the optical glass exhibit performance of eliminating or minimizing the residual chromatic aberration of the secondary spectrum, which requires that the optical glass has lower relative partial dispersion ($P_{g,F}$) and negative abnormal dispersion than conventional glass.

Optical glass with a refractive index of 1.56-1.66 and an Abbe number of 40-48 can be widely used in various optical systems. However, in the prior art, the optical glass within this range has a high relative partial dispersion $P_{g,F}$, making it difficult to meet the requirement of eliminating the residual chromatic aberration of the secondary spectrum. For example, CN103466936A discloses an optical glass with a refractive index of 1.50 or greater and an Abbe number of 55 or less, which does not have negative abnormal dispersion and contains a high amount of $GeO_2$ component, with the raw material cost expensive. Therefore, the development of an optical glass with a refractive index of 1.56-1.66 and an Abbe number of 40-48, and has a low relative partial dispersion ($P_{g,F}$), a negative abnormal dispersion, and a low cost is of great significance for advancements in the photoelectric field.

**SUMMARY**

The technical problem to be solved by the present disclosure is to provide an optical glass with a low relative partial dispersion ($P_{g,F}$), a negative abnormal dispersion, and a low-cost.

The technical solution adopted by the present disclosure to solve the technical problem is as follows:

An optical glass is provided, including the following components in weight percentage: $SiO_2$: 20-45%; $B_2O_3$: 18-38%; $Nb_2O_5$: 5-25%; $ZrO_2$: 2-20%; and $Na_2O$: 1-15%.

Further, the optical glass further includes the following components in weight percentage: MgO: 0-5%; and/or CaO: 0-10%; and/or SrO: 0-5%; and/or BaO: 0-5%; and/or $Li_2O$: 0-5%; and/or $K_2O$: 0-10%; and/or $WO_3$: 0-5%; and/or $Ta_2O_5$: 0-12%; and/or $TiO_2$: 0-5%; and/or ZnO: 0-5%; and/or $Ln_2O_3$: 0-5%; and/or $Al_2O_3$: 0-5%; and/or $GeO_2$: 0-5%; and/or a clarifying agent: 0-1%; wherein $Ln_2O_3$ is $La_2O_3$, $Gd_2O_3$, $Y_2O_3$, $Yb_2O_3$, $Lu_2O_3$, or any combination thereof, and the clarifying agent is $Sb_2O_3$, SnO, $SnO_2$, $CeO_2$, or any combination thereof.

An optical glass is provided, consisting of the following components in weight percentage: $SiO_2$: 20-45%; $B_2O_3$: 18-38%; $Nb_2O_5$: 5-25% ; $ZrO_2$: 2-20%; $Na_2O$: 1-15%; MgO: 0-5%; CaO: 0-10%; SrO: 0-5%; BaO: 0-5%; $Li_2O$: 0-5%; $K_2O$: 0-10%; $WO_3$: 0-5%; $Ta_2O_5$: 0-12%; $TiO_2$: 0-5%; ZnO: 0-5%; $Ln_2O_3$: 0-5%; $Al_2O_3$: 0-5%; $GeO_2$: 0-5%; and a clarifying agent: 0-1%; wherein $Ln_2O_3$ is $La_2O_3$, $Gd_2O_3$, $Y_2O_3$, $Yb_2O_3$, $Lu_2O_3$, or any combination thereof, and the clarifying agent is $Sb_2O_3$, SnO, $SnO_2$, $CeO_2$, or any combination thereof.

Further, the optical glass has the following component ratio based on weight percentage: $B_2O_3/SiO_2$: 0.51-1.6, preferably 0.6-1.5, more preferably 0.7-1.2, and further preferably 0.75-1.0.

Further, the optical glass has the following component ratio based on weight percentage: $Nb_2O_5/B_2O_3$: 0.15-1.0, preferably 0.2-0.9, more preferably 0.3-0.8, and further preferably 0.4-0.7.

Further, the optical glass has the following component ratio based on weight percentage: $B_2O_3/(Nb_2O_5+ZrO_2)$: 0.5-2.5, preferably 0.6-2.0, more preferably 0.7-1.5, and further preferably 0.8-1.3.

Further, the optical glass has the following component ratio based on weight percentage: $CaO/ZrO_2$: 2.0 or lower, preferably 0.05-1.5, more preferably 0.1-1.0, and further preferably 0.1-0.8.

Further, the optical glass has the following component ratio based on weight percentage: $(SiO_2+BaO)/B_2O_3$: 0.6-2.0, preferably 0.7-1.8, more preferably 0.8-1.6, and further preferably 1.0-1.5.

Further, the optical glass has the following component ratio based on weight percentage: $(Nb_2O_5+Na_2O+BaO)/B_2O_3$: 0.5-1.5, preferably 0.65-0.95, more preferably 0.7-0.95, and further preferably 0.7-0.9.

Further, the optical glass has the following component ratio based on weight percentage: $CaO/K_2O$: 0.1-5.0, preferably 0.3-3.0, more preferably 0.5-2.5, and further preferably 0.8-2.0.

Further, the optical glass has the following component ratio based on weight percentage: $(CaO+K_2O)/SiO_2$: 0.05-0.8, preferably 0.05-0.6, more preferably 0.1-0.5, and further preferably 0.1-0.4.

Further, the optical glass has the following component ratio based on weight percentage: $(Li_2O+Na_2O+K_2O)/B_2O_3$: 0.1-1.5, preferably 0.15-1.0, more preferably 0.2-0.9, and further preferably 0.25-0.7.

Further, the optical glass has the following components in weight percentage: $SiO_2$: 25-40%, preferably 28-38%; and/or $B_2O_3$: 21-35%, preferably 23-30%; and/or $NbaOs$: 8-20%, preferably 10-18%; and/or $ZrO_2$: 5-18%, preferably 7-15%; and/or $Na_2O$: 3-13%, preferably 5-12%; and/or $MgO$: 0-2%, preferably 0-1%; and/or $CaO$: 0.5-8%, preferably 1-6%; and/or $SrO$: 0-2%, preferably 0-1%; and/or $BaO$: 0-3%, preferably 0-2%; and/or $Li_2O$: 0-3%, preferably 0-2%; and/or $K_2O$: 0.5-8%, preferably 1-6%; and/or $WO_3$: 0-3%, preferably 0-1%; and/or $Ta_2O_5$: 0-5%, preferably 0-1%; and/or $TiO_2$: 0-1%; and/or $ZnO$: 0-3%, preferably 0-1%; and/or $Ln_2O_3$: 0-3%, preferably 0-1%; and/or $Al_2O_3$: 0-3%, preferably 0-1%; and/or $GeO_2$: 0-3%, preferably 0-1%; and/or the clarifying agent: 0-0.8%, preferably 0-0.5%; wherein $Ln_2O_3$ is $La_2O_3$, $Gd_2O_3$, $Y_2O_3$, $Yb_2O_3$, $Lu_2O_3$, or any combination thereof, and the clarifying agent is $Sb_2O_3$, $SnO$, $SnO_2$, $CeO_2$, or any combination thereof.

Further, the optical glass is free of the following components: $TiO_2$; and/or $WO_3$; and/or $Ta_2O_5$; and/or $GeO_2$; and/or $ZnO$; and/or $Ln_2O_3$; and/or $Al_2O_3$; wherein $Ln_2O_3$ is $La_2O_3$, $Gd_2O_3$, $Y_2O_3$, $Yb_2O_3$, $Lu_2O_3$, or any combination thereof.

Further, the optical glass has a refractive index $n_d$ of 1.56-1.66, preferably 1.58-1.65, more preferably 1.60-1.64, and/or an Abbe number $v_d$ of 40-48, preferably 41-47, more preferably 42-46.

Further, the optical glass has a relative partial dispersion $P_{g,F}$ of 0.7000 or less, preferably 0.6500 or less, more preferably 0.6000 or less, and/or a relative partial dispersion deviation value $\Delta P_{g,F}$ of -0.0040 or less, preferably -0.0050 or less, more preferably -0.0060 or less, and further preferably -0.0065 or less.

Further, the optical glass has a density $\rho$ of 3.0 $g/cm^3$ or less, preferably 2.90 $g/cm^3$ or less, more preferably 2.85 $g/cm^3$ or less; and/or a thermal expansion coefficient $\alpha_{100}$/300°C of $95 \times 10^{-7}$/K or less, preferably $90 \times 10^{-7}$/K or less, more preferably $85 \times 10^{-7}$/K or less; and/or a transition temperature $T_g$ of 560°C or less, preferably 550°C or less, more preferably 540°C or less; and/or $\lambda_{80}$ of 390 nm or less, preferably 380 nm or less, more preferably 370 nm or less; and/or $\lambda_5$ of 350 nm or less, preferably 340 nm or less, more preferably 330 nm or less; and/or a climate resistance CR of class 2 or higher, preferably class 1; and/or a Knoop hardness $H_K$ of $450 \times 10^7$ Pa or greater, preferably $480 \times 10^7$ Pa or greater, more preferably $500 \times 10^7$ Pa or greater; and/or an abrasiveness $F_A$ of 80-130, preferably 90-120, more preferably 95-115.

A glass preform is provided, which is manufactured from the optical glass as described above.

An optical element is provided, which is manufactured from the optical glass as described above or the glass preform as described above.

An optical instrument is provided, including the optical glass as described above and/or the optical element as described above.

The beneficial effects of the present disclosure are as follows: due to the reasonable design for components, the optical glass of the present disclosure that has the desired refractive index and Abbe number can be obtained at a low cost, and moreover, the glass of the present disclosure exhibits a low relative partial dispersion ($P_{g,F}$) and a negative abnormal dispersion, thereby satisfying the application in high-end photoelectric products.

## DETAILED DESCRIPTION OF THE EMBODIMENTS

The embodiments of the optical glass of the present disclosure will be described in detail below. However, the present disclosure is not limited to the following embodiments, but may be implemented with appropriate modifications within the scope of the purpose of the present disclosure. In addition, with respect to the repeated description parts, although appropriate omissions may be made sometimes, the subject matter of the present disclosure is not limited thereto. The optical glass of the present disclosure is sometimes referred to simply as the glass hereafter.

[Optical Glass]

The components (ingredients) of the optical glass of the present disclosure will be described below. In the present disclosure, unless otherwise specified herein, the amounts or total amounts of respective components are expressed as a weigh percentage (wt %). That is, the amounts or total amounts of respective components are expressed as a weigh percentage based on the total amount of glass material, converted into its oxide composition. Herein, "the total amount of glass material, converted into its oxide composition" refers to the total amount of oxides that are decomposed and converted from raw materials, such as oxides, composite salts, or hydroxides, used in the optical glass of the present disclosure, with this total amount taken as 100%.

Unless otherwise noted in specific circumstances, the numerical range listed herein includes upper and lower limits, and the words "above" and "below" include endpoint values as well as all integers and fractions within the range, but not limited to the specific values listed when the range is defined. The term "and/or" used herein is inclusive. For example, the phrase "A and/or B" includes only A, only B, and both A and B.

<Essential Components and Optional Components>

SiOz has an effect of improving the chemical stability of the glass, maintaining a suitable viscosity for the molten glass, and reducing the corrosion to the refractory materials. In the present disclosure, the above-mentioned effect is achieved by including $SiO_2$ in an amount of 20% or greater, preferably 25% or greater, and more preferably 28% or greater. If the amount of $SiO_2$ is too high, the melting difficulty of the glass would be increased, and it is unfavorable for the dissolution of ZrOz in the components. Therefore, in the present disclosure, the upper limit of the amount of $SiO_2$ is 45%, preferably 40%, and more preferably 38%.

$B_2O_3$ is beneficial for reducing the short-wave special dispersion of the glass, which improves the negative abnormal dispersion performance of the glass. If the amount of $B_2O_3$ is less than 18%, the high-temperature viscosity of the glass would be high, leading to poor melting performance and difficulty in meeting design requirements for the negative abnormal dispersion. If the amount of $B_2O_3$ is greater than 38%, the chemical stability of the glass would be deteriorated, making it prone to devitrification. Therefore, the amount of $B_2O_3$ is 18-38%, preferably 21-35%, and more preferably 23-30%.

Through extensive experimental studies, the inventors have found that, in some embodiments, controlling the ratio of the amounts of $B_2O_3$ to SiOz, $B_2O_3/SiO_2$, within the range of 0.51-1.6 is beneficial for achieving a lower transition temperature while reducing the values of $P_{g,F}$ and $\Delta P_{g,F}$ of the glass. Therefore, $B_2O_3/SiO_2$ is preferably 0.51-1.6, and more preferably 0.6-1.5. Further, controlling $B_2O_3/SiO_2$ within the range of 0.7-1.2 is also beneficial for improving the hardness of the glass while ensuring a suitable abrasiveness of the glass. Therefore, $B_2O_3/SiO_2$ is further preferably 0.7-1.2, and yet further preferably 0.75-1.0.

$Nb_2O_5$ is a high-refractive and high-dispersion component, which can improve the refractive index and devitrification resistance of the glass and reduce the thermal expansion coefficient of the glass without significantly increasing the values of $P_{g,F}$ and $\Delta P_{g,F}$. In the present disclosure, the above-mentioned effect is achieved by including $Nb_2O_5$ in an amount of 5% or greater. The lower limit of the amount of $Nb_2O_5$ is preferably 8%, and more preferably 10%. If the amount of $Nb_2O_5$ is greater than 25%, the thermal stability and the climate resistance of the glass would be reduced, and the light transmittance of the glass would be decreased. Therefore, in the present disclosure, the upper limit of the amount of NbaOs is 25%, preferably 20%, and more preferably 18%.

In some embodiments, by controlling the ratio of the amounts of $Nb_2O_5$ to $B_2O_3$, $Nb_2O_5/B_2O_3$, within the range of 0.15-1.0, the values of $P_{g,F}$ and $\Delta P_{g,F}$ of the glass can be decreased without decreasing the light transmittance of the glass. Therefore, $Nb_2O_5/B_2O_3$ is preferably 0.15-1.0, and more preferably 0.2-0.9. Further, when $Nb_2O_5/B_2O_3$ is within the range of 0.3-0.8, it is also beneficial for reducing the thermal expansion coefficient and the transition temperature of the glass. Therefore, $Nb_2O_5/B_2O_3$ is further preferably 0.3-0.8, and yet further preferably 0.4-0.7.

ZrOz can increase the refractive index of the glass and regulate the short-wave special dispersion of the glass, reduce the value of $\Delta P_{g,F}$ of the glass, and improve the devitrification resistance and the strength of the glass. In the present disclosure, the above-mentioned effect is obtained by including ZrOz in an amount of 2% or greater, preferably 5% or greater, and more preferably 7% or greater. If the amount of ZrOz is greater than 20%, the melting difficulty of the glass would be increased, the melting temperature of the glass would be risen, and inclusions would be produced inside the glass and the light transmittance of the glass would be decreased. Therefore, the amount of $ZrO_2$ is 20% or less, preferably 18% or less, and more preferably 15% or less.

In some embodiments, by controlling the ratio of the amount of $B_2O_3$ to the total amount of $Nb_2O_5$ and ZrOz ($Nb_2O_5+ZrO_2$), $B_2O_3/(Nb_2O_5+ZrO_2)$, within the range of 0.5-2.5, the glass can have lower values of $P_{g,F}$ and $\Delta P_{g,F}$ without increasing the density of the glass. Therefore, $B_2O_3/(Nb_2O_5+ZrO_2)$ is preferably 0.5-2.5, and more preferably 0.6-2.0. Further, having $B_2O_3/(Nb_2O_5+ZrO_2)$ within the range of 0.7 to 1.5 is also beneficial for improving the climate resistance and the extent of bubble of the glass. Therefore, $B_2O_3/(Nb_2O_5+ZrO_2)$ is further preferably 0.7-1.5, and yet further preferably 0.8-1.3.

MgO can reduce the refractive index and melting temperature of the glass. However, if the amount of MgO is too high, the devitrification resistance and the stability of the glass would be decreased, and the cost of the glass would be increased. Therefore, the amount of MgO is limited to 0-5%, preferably 0-2%, and more preferably 0-1%.

CaO helps to regulate the optical constants of the glass, improve the processability of the glass, and reduce the density of the glass. However, if the amount of CaO is too high, the devitrification resistance of the glass would be deteriorated. Therefore, the amount of CaO is limited to 0-10%, preferably 0.5-8%, and more preferably 1-6%.

In some embodiments, by controlling the ratio of the amounts of CaO to ZrOz, $CaO/ZrO_2$, to be 2.0 or less, the glass can have a suitable abrasiveness without deteriorating the devitrification resistance of the glass. Therefore, $CaO/ZrO_2$ is preferably 2.0 or less. Further, by controlling $CaO/ZrO_2$ within the range of 0.05-1.5, it is also beneficial for improving the climate resistance and the alkali resistance of the glass. Therefore, $CaO/ZrO_2$ is preferably 0.05-1.5, further preferably 0.1-1.0, and yet further preferably 0.1-0.8.

SrO can regulate the refractive index and the Abbe number of the glass. However, if the amount of SrO is too high, the chemical stability of the glass would be decreased and the cost of the glass would be increased significantly. Therefore, the amount of SrO is limited to 0-5%, preferably 0-2%, and more preferably 0-1%.

BaO can improve the devitrification resistance and the hardness of the glass, and reduce the refractive index, the temperature coefficient, and the thermal expansion coefficient of the glass. However, a high amount of BaO would lead to reduced climate resistance and chemical stability of the glass. Therefore, the amount of BaO is 5% or less, preferably 3% or less, and more preferably 2% or less.

In some embodiments, by controlling the ratio of the total amount of $SiO_2$ and BaO ($SiO_2$+BaO) to the amount of $B_2O_3$, ($SiO_2$+BaO)/$B_2O_3$, within the range of 0.6-2.0, the hardness and the abrasiveness of the glass can be optimized without increasing the transition temperature of the glass. Therefore, ($SiO_2$+BaO)/$B_2O_3$ is preferably 0.6-2.0, more preferably 0.7-1.8, further preferably 0.8-1.6, and yet further preferably 1.0-1.5.

$Li_2O$ can decrease the transition temperature of the glass, regulate the high-temperature viscosity of the glass, and improve the melting property of the glass. However, if the amount of $Li_2O$ is high, it is detrimental to the chemical stability and cost efficiency of the glass. Therefore, the amount of $Li_2O$ in the present disclosure is 5% or less, preferably 3% or less, and more preferably 2% or less.

$Na_2O$, which has an effect of improving the melting property of the glass, can improve the melting effect of the glass, while helping to reduce the values of $P_{g,F}$ and $\Delta P_{g,F}$ of the glass. If the amount of $Na_2O$ is greater than 15%, the chemical stability and the climate resistance of the glass would be decreased. Therefore, the amount of $Na_2O$ is 1-15%, preferably 3-13%, and more preferably 5-12%.

In some embodiments, controlling the ratio of the total amount of $Nb_2O_5$, $Na_2O$, and BaO ($Nb_2O_5$+$Na_2O$+BaO) to the amount of $B_2O_3$, ($Nb_2O_5$+$Na_2O$+BaO)/$B_2O_3$, within the range of 0.5-1.5 can reduce the thermal expansion coefficient of the glass while reducing the values of $P_{g,F}$ and $\Delta P_{g,F}$ of the glass. Therefore, ($Nb_2O_5$+$Na_2O$+BaO)/$B_2O_3$ is preferably 0.5-1.5. Further, controlling ($Nb_2O_5$+$Na_2O$+BaO)/$B_2O_3$ within the range of 0.65-0.95 is also beneficial for improving the hardness and the climate resistance of the glass. Therefore, ($Nb_2O_5$+$Na_2O$+BaO)/$B_2O_3$ is more preferably 0.65-0.95, further preferably 0.7-0.95, and yet further preferably 0.7-0.9.

$K_2O$ has an effect of improving the thermal stability and the melting property of the glass. However, if the amount of $K_2O$ is greater than 10%, the devitrification resistance and the chemical stability of the glass would be deteriorated. Therefore, in the present disclosure, the amount of $K_2O$ is 10% or less, preferably 0.5-8%, more preferably 1-6%.

In some embodiments, controlling the ratio of amounts of CaO to $K_2O$, CaO/$K_2O$, within the range of 0.1-5.0 can improve the devitrification resistance of the glass while reducing the density of the glass. Therefore, CaO/$K_2O$ is preferably 0.1-5.0, and more preferably 0.3-3.0. Furthermore, controlling CaO/$K_2O$ within the range of 0.5-2.5 is also beneficial for reducing the thermal expansion coefficient of the glass and optimizing the extent of stria of the glass. Therefore, CaO/$K_2O$ is further preferably 0.5-2.5, and yet further preferably 0.8-2.0.

In some embodiments, controlling the ratio of the total amount of CaO and $K_2O$ (CaO+$K_2O$) to the amount of $SiO_2$, (CaO+$K_2O$)/$SiO_2$, within the range of 0.05-0.8 allows the glass to obtain a suitable abrasiveness and an excellent extent of stria. Therefore, (CaO+$K_2O$)/$SiO_2$ is preferably 0.05-0.8, and more preferably 0.05-0.6. Further, controlling (CaO+$K_2O$)/$SiO_2$ within the range of 0.1-0.5 is also beneficial for improving the light transmittance and the hardness of the glass. Therefore, (CaO+$K_2O$)/$SiO_2$ is further preferably 0.1-0.5, and yet further preferably 0.1-0.4.

In some embodiments, controlling the ratio of the total amount of alkali metal oxides ($Li_2O$+$Na_2O$+$K_2O$) to the amount of $B_2O_3$, ($Li_2O$+$Na_2O$+$K_2O$)/$B_2O_3$, within the range of 0.1-1.5 can reduce the transition temperature and the density of the glass while improving the light transmittance of the glass. Therefore, ($Li_2O$+$Na_2O$+$K_2O$)/$B_2O_3$ is preferably 0.1-1.5, more preferably 0.15-1.0, further preferably 0.2-0.9, and yet further preferably 0.25-0.7.

$WO_3$ can improve the refractive index and the mechanical strength of the glass. If the amount of $WO_3$ is greater than 5%, the thermal stability of the glass would be decreased and the devitrification resistance of the glass would be lowered. Therefore, the upper limit of the amount of $WO_3$ is 5%, preferably 3%, and more preferably 1%. In some embodiments, it is further preferred that no $WO_3$ is contained.

$Ta_2O_5$ has an effect of increasing the refractive index and improving the devitrification resistance of the glass. However, if the amount of $Ta_2O_5$ is too high, the thermal stability of the glass would be decreased, the density of the glass would be increased, and it would be difficult to control the optical constants within the desired range. On the other hand, compared with other components, $Ta_2O_5$ is very expensive, and its usage should be minimized from the perspective of practicality and cost. Therefore, the amount of $Ta_2O_5$ in the present disclosure is limited to 0-12%, preferably 0-5%, more preferably 0-1%, and it is further preferred that no $Ta_2O_5$ is contained.

$GeO_2$ has an effect of increasing the refractive index and the devitrification resistance of the glass. However, if the amount of $GeO_2$ is too high, the chemical stability of the glass would be decreased, and it would be difficult to control the optical constants within the desired range. On the other hand, compared with other components, $GeO_2$ is very expensive, and its usage should be minimized from the perspective of practicality and cost. Therefore, the amount of $GeO_2$ in the present disclosure is limited to 0-5%, preferably 0-3%, more preferably 0-1%, and it is further preferred that no $GeO_2$ is contained.

$TiO_2$ has an effect of increasing the refractive index and the dispersion of the glass. An appropriate amount of $TiO_2$ can make the glass more stable and reduce the viscosity of the glass. If the amount of $TiO_2$ is greater than 5%, the devitrification tendency of the glass would be increased, the transition temperature would be risen, and the values of $P_{g,F}$ and $\Delta P_{g,F}$ of the glass would be increased sharply. Therefore, the amount of $TiO_2$ in the present disclosure is 5% or less, preferably 1% or less, and more preferably no $TiO_2$ is contained.

ZnO can regulate the refractive index and the dispersion of glass, reduce the high-temperature viscosity and the transition temperature of the glass so that the glass can be molten at a lower temperature, thereby improving the light transmittance of the glass. If the amount of ZnO is too high, the molding difficulty of the glass would be increased, the devitrification resistance of the glass would be deteriorated, and it would be not conducive to the glass to obtain negative abnormal dispersion. Therefore, the amount of ZnO is 0-5%, preferably 0-3%, and more preferably 0-1%. In some embodiments, it is further preferred that no ZnO is contained.

$Ln_2O_3$ ($Ln_2O_3$ is $La_2O_3$, $Gd_2O_3$, $Y_2O_3$, $Yb_2O_3$, $Lu_2O_3$, or any combination thereof) is a component that increases the refractive index and the chemical stability of the glass. By controlling the amount of $Ln_2O_3$ to be 5% or less, the devitrification resistance of the glass can be prevented from decreasing. The upper limit of the amount of $Ln_2O_3$ is preferably 3%, and more preferably 1%. In some embodiments, it is further preferred that no $Ln_2O_3$ is contained.

$Al_2O_3$ can improve the chemical stability of the glass. However, if the amount of $Al_2O_3$ is greater than 5%, the melting property and the light transmittance of the glass would be deteriorated. Therefore, in the present disclosure, the amount of $Al_2O_3$ is 0-5%, preferably 0-3%, and more preferably 0-1%. In some embodiments, it is further preferred that no $Al_2O_3$ is contained.

In the present disclosure, by including 0-1% of $Sb_2O_3$, SnO, $SnO_2$, $CeO_2$, or any combination thereof as the clarifying agent, the clarification effect of the glass can be improved. The amount of the clarifying agent is preferably 0-0.8%, and more preferably 0-0.5%. If the amount of $Sb_2O_3$ is greater than 1%, the clarification performance of the glass tends to be decreased, and the corrosion to the platinum or platinum alloy vessel for melting the glass would be promoted and the molding mold for the glass would be deteriorated due to its strong oxidizing effect. Therefore, the amount of $Sb_2O_3$ is preferably 0-1%, and more preferably 0-0.5%. SnO or $SnO_2$ can also be used as the clarifying agent. However, if the amount of SnO or SnOz is greater than 1%, the tendency of the coloring of glass would be increased, or Sn would become the starting point of generation of the nucleation when the glass is heated, softened, and re-formed such as re-mold-pressed, resulting in a tendency of devitrification. Therefore, in the present disclosure, the amount of $SnO_2$ is preferably 0-1%, more preferably 0-0.5%; the amount of SnO is preferably 0-1%, more preferably 0-0.5%. The role and the amount of CeOz are consistent with SnOz, and its amount is preferably 0-1%, more preferably 0-0.5%, and it is further preferred that no CeOz is contained.

<Unnecessary components>

In the glass of the present disclosure, the inclusion of oxides of transition metals such as V, Cr, Mn, Fe, Co, Ni, Cu, Ag, and Mo, even in minimum amount individually or combined, will cause the glass to be colored and absorb lights at a specific wavelength in the visible light region, thereby impairing the effects of increasing the visible light transmittance in the present disclosure. Therefore, it is preferable for the glass to be free of these oxides, especially for the optical glass having specific requirements on the transmittance of light at the wavelength in the visible region.

In recent years, there has been a trend towards controlled use of oxides of Th, Cd, Tl, Os, Be, and Se as harmful chemical substances. Environmental protection measures are essential not only in the manufacturing stage of the glass, but also in the processing stage of the glass and the disposal after productization. Therefore, given the emphasis on environmental impact, it is preferable for these oxides to be practically absent, except for unavoidable inclusion. Consequently, the optical glass essentially excludes substances that pollute the environment. As a result, the optical glass of the present disclosure can be manufactured, processed, and disposed of without the need for the specific environmental precautions.

In order to achieve the environmental friendliness, the optical glass in the present disclosure is preferably free of AsaOs or PbO.

The terms such as "free of" and "0%" as used herein mean that the listed compound, molecule, or element is not intentionally introduced as a raw material into the optical glass of the present disclosure, but may be unintentionally introduced in small or trace amount into the final optical glass as such impurity or component is unintentionally present in the raw materials and/or equipment for producing the optical glass. This situation also falls within the protection scope of the present disclosure.

The properties of the optical glass of the present disclosure will be described below.

<Refractive Index and Abbe Number>

The refractive Index ($n_d$) and the Abbe number ($v_d$) of the optical glass are determined according to the method specified in GB/T 7962.1-2010.

In some embodiments, the lower limit of the refractive index ($n_d$) of the optical glass of the present disclosure is 1.56, preferably 1.58, and more preferably 1.60. In some embodiments, the upper limit of the refractive index ($n_d$) of the optical glass of the present disclosure is 1.66, preferably 1.65, and more preferably 1.64.

In some embodiments, the lower limit of the Abbe number ($v_d$) of the optical glass of the present disclosure is 40, preferably 41, and more preferably 42. In some embodiments, the upper limit of the Abbe number ($v_d$) of the optical glass of the present disclosure is 48, preferably 47, and more preferably 46.

<Density>

The density ($\rho$) of the optical glass is determined according to the method specified in GB/T 7962.20-2010.

In some embodiments, the density ($\rho$) of the optical glass of the present disclosure is 3.0 g/cm$^3$ or less, preferably 2.90 g/cm$^3$ or less, and more preferably 2.85 g/cm$^3$ or less.

<Thermal Expansion Coefficient>

The thermal expansion coefficient ($\alpha_{100/300°C}$) of the optical glass is determined from 100°C to 300°C according to the method specified in GB/T 7962.16-2010.

In some embodiments, the thermal expansion coefficient ($\alpha_{100/300°C}$) of the optical glass of the present disclosure is 95×10$^{-7}$/K or less, preferably 90×10$^{-7}$/K or less, and more preferably 85×10$^{-7}$/K or less.

<Transition Temperature>

The transition temperature ($T_g$) of the optical glass is determined according to the method specified in GB/T 7962.16-2010.

In some embodiments, the transition temperature ($T_g$) of the optical glass of the present disclosure is 560°C or less, preferably 550°C or less, and more preferably 540°C or less.

<Chromaticity>

The short-wave transmission spectral characteristics of the glass of the present disclosure are represented by chromaticity ($\lambda_{80}$ and $\lambda_5$). $\lambda_{80}$ refers to the wavelength corresponding to a transmittance of 80% through the glass. The determination of $\lambda_{80}$ is conducted using a glass with two opposing flat surfaces that are parallel to each other and optically polished, with a thickness of 10 ± 0.1 mm. The spectral transmittance is measured in the wavelength range from 280 nm to 700 nm, and the wavelength at which the transmittance reaches 80% is recorded. The term "spectral transmittance" or "transmittance" is a measurement defined as $I_{out}/I_{in}$, wherein $I_{in}$ refers to the intensity of the incident light that is perpendicular to the aforementioned surfaces of the glass, and $I_{out}$ refers to the intensity of the light that passes through the glass and exits from one of the surfaces. This measurement also accounts for the transmittance loss due to the surface reflection on the aforementioned surfaces of the glass. A higher refractive index of the glass results in greater surface reflection losses. Therefore, in high-refractive-index glass, a smaller $\lambda_{80}$ value indicates minimal intrinsic coloration of the glass and a high light transmittance.

In some embodiments, $\lambda_{80}$ of the optical glass of the present disclosure is less than or equal to 390 nm, preferably less than or equal to 380 nm, and more preferably less than or equal to 370 nm.

In some embodiments, $\lambda_5$ of the optical glass of the present disclosure is less than or equal to 350 nm, preferably less than or equal to 340 nm, and more preferably less than or equal to 330 nm.

<Climate Resistance>

The climate resistance (CR) of the glass is determined as follows: the sample is placed in a test box with a saturated water vapor environment at a relative humidity of 90%, and cycled alternately every 1 hour at 40 to 50 °C for 15 cycles. The climate resistance is classified based on the change in turbidity before and after the sample placement. The climate resistance classification is shown in Table 1.

Table 1.

| Class | 1 | 2 | 3 | 4 | | |
|---|---|---|---|---|---|---|
| | | | | a | b | c |
| Increase in turbidity △H (%) | <0.3 | 0.3-1.0 | 1.0-2.0 | 2.0-4.0 | 4.0-6.0 | ≥6.0 |

In some embodiments, the climate resistance (CR) of the optical glass of the present disclosure is Class 2 or higher, preferably Class 1.

<Knoop Hardness>

The Knoop hardness ($H_K$) of the optical glass is determined according to the test method specified in GB/T 7962.18-2010.

In some embodiments, the Knoop hardness ($H_K$) of the optical glass of the present disclosure is $450 \times 10^7$ Pa or greater, preferably $480 \times 10^7$ Pa or greater, and more preferably $500 \times 10^7$ Pa or greater.

<Relative Partial Dispersion and Relative Partial Dispersion Deviation >

The following formulas are used to explain the determination of the relative partial dispersion ($P_{g,F}$) and the relative partial dispersion deviation ($\Delta P_{g,F}$).

The relative partial dispersion for wavelengths x and y is expressed by the following formula (1):

$$P_{x,y} = (n_x - n_y) / (n_F - n_C) \qquad (1)$$

According to the Abbe number formula, for most so-called "normal glasses" (H-K6 and F4 are selected as "normal glasses" below), the following formula (2) is valid:

$$P_{x,y} = m_{x,y} \cdot v_d + b_{x,y} \qquad (2)$$

This linear relationship is expressed with $P_{x,y}$ as the ordinate and $v_d$ as the abscissa, where $m_{x,y}$ is the slope and $b_{x,y}$ is the intercept.

As is well known, the correction of the secondary spectrum, i.e. the achromatization of more than two wavelengths, requires at least one glass that does not conform to the above formula (2) (i.e. its $P_{x,y}$ value deviates from the Abbe empirical formula), and its deviation value is represented by $\Delta P_{x,y}$. Then each $P_{x,y}$-$v_d$ point is shifted by $\Delta P_{x,y}$ relative to the "normal line" that conforms to the above formula (2). Thus, the $\Delta P_{x,y}$ value of each glass can be calculated using the following formula (3):

$$P_{x,y} = m_{x,y} \cdot v_d + b_{x,y} + \Delta P_{x,y} \qquad (3)$$

Therefore, $\Delta P_{x,y}$ quantitatively represents the deviation characteristics of the special dispersion compared with "normal glass".

Therefore, the relative partial dispersion ($P_{g,F}$) and the relative partial dispersion deviation ($\Delta P_{g,F}$) can be calculated from the following formulas (4) and (5):

$$P_{g,F} = (n_g - n_F) / (n_F - n_C) \qquad (4)$$

$$\Delta P_{g,F} = P_{g,F} - 0.6457 + 0.001703 v_d \qquad (5)$$

In some embodiments, the relative partial dispersion ($P_{g,F}$) of the optical glass of the present disclosure is 0.7000 or less, preferably 0.6500 or less, and more preferably 0.6000 or less.

In some embodiments, the relative partial dispersion deviation ($\Delta P_{g,F}$) of the optical glass of the present disclosure is -0.0040 or less, preferably -0.0050 or less, more preferably -0.0060 or less, and further preferably -0.0065 or less.

<Abrasiveness>

The abrasiveness ($F_A$) of the optical glass is defined as the value obtained by multiplying the ratio of the abrasion loss of the sample to the abrasion loss (volume) of the standard sample (K9 glass) under identical conditions by 100. It is expressed by the following formula:

$$F_A = V/V_0 \times 100 = (W/\rho)/(W_0/\rho_0) \times 100$$

Wherein: V-volume abrasion loss of the sample being tested;
$V_0$- volume abrasion loss of standard sample;
W-mass abrasion loss of the sample being tested;
$W_0$-mass abrasion loss of standard sample;
$\rho$- density of the sample being tested;
$\rho_0$- density of the standard sample.

In some embodiments, the abrasiveness ($F_A$) of the optical glass of the present disclosure has a lower limit of 80, preferably 90, more preferably 95, and an upper limit of 130, preferably 120, more preferably 115.

[Manufacturing Method of Optical Glass]

The manufacturing method of the optical class in the present disclosure is as follows. The glass of the present disclosure is produced by a conventional process using conventional raw materials, including, but is not limited to, the following steps. Raw materials, such as an oxide, a hydroxide, a fluoride, a complex slat (e.g., carbonate, nitrate, phosphate, metaphosphate, etc.), and boric acid, were formulated by a conventional method and placed into a melting furnace (such as platinum or platinum alloy crucible) at 1200-1500°C for melting. A homogeneous molten glass without bubbles and undissolved substances is obtained after clarification and homogenization. The molten glass is casted in a mold and annealed to form the optical class. Raw materials, the manufacturing process, and process parameters may be appropriately selected by those skilled in the art according to actual needs.

[Glass Preform and Optical Element]

The glass preform can be manufactured from the prepared optical glass by means of direct drip molding, abrasive machining, or pressing molding such as hot pressing molding. More specifically, the molten optical glass can be subjected to the direct precision drip molding to manufacture the precision glass preform. Alternatively, the optical glass can be machined, for example, milled or grinded to manufacture the glass preform. Alternatively, the optical glass can be formed into a preform for pressing molding, which is then hot-pressed and grinded to manufacture the glass preform. It should be noted that the manufacture method of the glass preform is not limited to the above means.
As described above, the optical glass of the present disclosure is useful for various optical elements and optical designs. Particularly preferably, the optical glass of the present disclosure is formed into a preform which is then subjected to hot pressing molding, precision-stamping, or other molding methods to prepare the optical elements such as lens and prism.
The glass preform or the optical element of the present disclosure is formed from the optical glass of the present disclosure as described above. The glass preform of the present disclosure has excellent properties inherent in the optical glass. The optical element of the present disclosure has excellent properties inherent in the optical glass. The present disclosure can provide optical elements of high optical values, such as lenses and prisms.
Examples of the lens include various lenses with spherical or aspheric surfaces, such as concave meniscus lens, convex meniscus lens, biconvex lens, biconcave lens, planoconvex lens, and planoconcave lens.

[Optical Instruments]

The optical element formed by the optical glass of the present disclosure can be used to manufacture optical instruments such as photographic equipment, camera equipment, projection equipment, display equipment, vehicle-mounted equipment and monitoring equipment.

Examples

<Examples of Optical Glass >

In order to further clearly illustrate and describe the technical solutions of the present disclosure, the following non-limiting examples are provided.

The optical glasses having the compositions shown in Tables 2 to 4 were obtained by the above manufacture method of the optical glass. In addition, the properties of the glasses were determined by the test method described in the present disclosure, and the measurement results are shown in Tables 2 to 4.

Table 2

| Example (wt%) | 1# | 2# | 3# | 4# | 5# | 6# | 7# | 8# |
|---|---|---|---|---|---|---|---|---|
| $SiO_2$ | 28.4 | 29.5 | 37.2 | 38.5 | 31.4 | 25.6 | 27.3 | 42.1 |
| $B_2O_3$ | 29.3 | 29.3 | 22.5 | 25.4 | 26.5 | 30.1 | 32.4 | 23.3 |
| $Nb_2O_5$ | 11.2 | 10.4 | 17.6 | 10.6 | 15.4 | 7.7 | 17.3 | 10.2 |
| $ZrO_2$ | 14.3 | 6.3 | 10.1 | 4.3 | 9.7 | 17.2 | 9.4 | 10.0 |
| MgO | 0 | 1.0 | 0 | 0 | 0.5 | 0 | 0 | 0 |
| CaO | 0.8 | 8.5 | 2.2 | 3.5 | 2.5 | 4.1 | 0.8 | 1.5 |
| SrO | 0 | 0 | 0 | 0 | 0 | 0 | 0 | 0 |
| BaO | 0.4 | 2.5 | 1.2 | 1.7 | 0.8 | 0.6 | 0.5 | 1.5 |
| $Li_2O$ | 0.5 | 0 | 0.8 | 1.5 | 0.4 | 2.5 | 0.4 | 0.6 |
| $Na_2O$ | 11.5 | 10.4 | 2.2 | 12.4 | 7.5 | 9.2 | 8.6 | 4.8 |
| $K_2O$ | 2.6 | 2.0 | 5.5 | 1.4 | 3.5 | 2.8 | 3.2 | 4.5 |
| $WO_3$ | 0 | 0 | 0 | 0.5 | 0 | 0 | 0 | 0.4 |
| $Ta_2O_5$ | 0 | 0 | 0 | 0 | 0.5 | 0 | 0 | 0 |
| $GeO_2$ | 0 | 0 | 0 | 0 | 0 | 0 | 0 | 0 |
| $TiO_2$ | 0 | 0 | 0 | 0 | 0 | 0 | 0 | 0 |
| ZnO | 0 | 0 | 0 | 0 | 0 | 0 | 0 | 0 |
| $La_2O_3$ | 0.8 | 0 | 0.5 | 0 | 0 | 0 | 0 | 0 |
| $Gd_2O_3$ | 0 | 0 | 0 | 0 | 1.0 | 0 | 0 | 0.2 |
| $Y_2O_3$ | 0 | 0 | 0 | 0 | 0 | 0 | 0 | 0.8 |
| $Yb_2O_3$ | 0 | 0 | 0 | 0 | 0 | 0 | 0 | 0 |
| $Lu_2O_3$ | 0 | 0 | 0 | 0 | 0 | 0 | 0 | 0 |
| $Al_2O_3$ | 0 | 0 | 0 | 0 | 0 | 0 | 0 | 0 |
| $Sb_2O_3$ | 0.2 | 0.1 | 0.2 | 0 | 0.3 | 0.2 | 0.1 | 0.1 |
| SnO | 0 | 0 | 0 | 0 | 0 | 0 | 0 | 0 |
| $SnO_2$ | 0 | 0 | 0 | 0.2 | 0 | 0 | 0 | 0 |
| CeOz | 0 | 0 | 0 | 0 | 0 | 0 | 0 | 0 |
| Total | 100 | 100 | 100 | 100 | 100 | 100 | 100 | 100 |
| $B_2O_3/SiO_2$ | 1.032 | 0.993 | 0.605 | 0.66 | 0.844 | 1.176 | 1.187 | 0.553 |
| $CaO/ZrO_2$ | 0.056 | 1.349 | 0.218 | 0.814 | 0.258 | 0.238 | 0.085 | 0.15 |
| $Nb_2O_5/B_2O_3$ | 0.382 | 0.355 | 0.782 | 0.417 | 0.581 | 0.256 | 0.534 | 0.438 |
| $(Li_2O+Na_2O+K_2O)/B_2O_3$ | 0.498 | 0.423 | 0.378 | 0.602 | 0.43 | 0.482 | 0.377 | 0.425 |
| $(Nb_2O_5+Na_2O+BaO)/B_2O_3$ | 0.788 | 0.795 | 0.933 | 0.972 | 0.894 | 0.581 | 0.815 | 0.708 |
| $B_2O_3/(Nb_2O_5+ZrO_2)$ | 1.149 | 1.754 | 0.812 | 1.705 | 1.056 | 1.209 | 1.213 | 1.153 |
| $CaO/K_2O$ | 0.308 | 4.25 | 0.4 | 2.5 | 0.714 | 1.464 | 0.25 | 0.333 |
| $(CaO+K_2O)/SiO_2$ | 0.12 | 0.356 | 0.207 | 0.127 | 0.191 | 0.27 | 0.147 | 0.143 |
| $(SiO_2+BaO)/B_2O_3$ | 0.983 | 1.092 | 1.707 | 1.583 | 1.215 | 0.87 | 0.858 | 1.871 |

(continued)

| Example (wt%) | 1# | 2# | 3# | 4# | 5# | 6# | 7# | 8# |
|---|---|---|---|---|---|---|---|---|
| nd | 1.6152 | 1.5814 | 1.6353 | 1.5734 | 1.6257 | 1.6128 | 1.6185 | 1.5934 |
| Vd | 44.32 | 46.85 | 43.52 | 45.50 | 43.31 | 44.05 | 43.68 | 46.12 |
| $\lambda_{80}$ (nm) | 364 | 365 | 366 | 360 | 358 | 361 | 360 | 362 |
| $\lambda_5$ (nm) | 331 | 333 | 335 | 330 | 328 | 329 | 331 | 329 |
| $T_g$ (°C) | 535 | 530 | 536 | 538 | 531 | 537 | 528 | 537 |
| $\rho$ (g/cm$^3$) | 2.77 | 2.88 | 2.80 | 2.84 | 2.75 | 2.74 | 2.79 | 2.78 |
| CR | Class 1 | Class 1 | Class 1 | Class 1 | Class 1 | Class 1 | Class 1 | Class 1 |
| FA | 112 | 105 | 93 | 94 | 106 | 114 | 115 | 92 |
| $\alpha_{100}$/300°C < $\times 10^{-7}$/K) | 78 | 77 | 76 | 86 | 78 | 93 | 75 | 77 |
| $H_K$ ($\times 10^7$Pa) | 521 | 520 | 517 | 509 | 525 | 515 | 523 | 513 |
| $P_{g,F}$ | 0.5628 | 0.5635 | 0.5632 | 0.5653 | 0.5625 | 0.5645 | 0.5630 | 0.5642 |
| $\Delta P_{g,F}$ | -0.0083 | -0.0059 | -0.0071 | -0.0056 | -0.0068 | -0.0084 | -0.0067 | -0.0070 |

Table 3

| Example (wt%) | 9# | 10# | 11# | 12# | 13# | 14# | 15# | 16# |
|---|---|---|---|---|---|---|---|---|
| $SiO_2$ | 26.4 | 30.5 | 32.5 | 33.1 | 36.4 | 39.4 | 35.2 | 40.4 |
| $B_2O_3$ | 26.0 | 27.2 | 22.2 | 21.0 | 23.2 | 23.0 | 25.4 | 21.1 |
| $Nb_2O_5$ | 13.5 | 14.2 | 16.2 | 20.2 | 22.5 | 12.5 | 13.6 | 11.5 |
| $ZrO_2$ | 5.5 | 8.6 | 11.4 | 7.5 | 3.5 | 13.2 | 12.4 | 8.6 |
| MgO | 0 | 0 | 0 | 0 | 0 | 0 | 0 | 0 |
| CaO | 5.2 | 6.3 | 4.2 | 3.8 | 3.5 | 2.2 | 4.5 | 4.6 |
| SrO | 0 | 0 | 0.5 | 0 | 0 | 0 | 0 | 0 |
| BaO | 1.7 | 0.6 | 0.4 | 0.7 | 0.5 | 0.3 | 0.5 | 0.4 |
| $Li_2O$ | 0.5 | 0.7 | 0.8 | 1.4 | 1.2 | 0.3 | 0.5 | 1.8 |
| $Na_2O$ | 13.5 | 9.2 | 6.7 | 8.2 | 7.3 | 7.1 | 6.6 | 10.2 |
| $K_2O$ | 7.5 | 2.6 | 3.3 | 2.4 | 1.7 | 0.8 | 1.0 | 1.3 |
| $WO_3$ | 0 | 0 | 0 | 1.0 | 0 | 0 | 0 | 0 |
| $Ta_2O_5$ | 0 | 0 | 0 | 0 | 0 | 1.0 | 0 | 0 |
| $GeO_2$ | 0 | 0 | 0 | 0 | 0 | 0 | 0 | 0 |
| $TiO_2$ | 0 | 0 | 0 | 0 | 0 | 0 | 0 | 0 |
| ZnO | 0 | 0 | 0.5 | 0 | 0 | 0 | 0 | 0 |
| $La_2O_3$ | 0 | 0 | 1.0 | 0 | 0 | 0 | 0 | 0 |
| $Gd_2O_3$ | 0 | 0 | 0 | 0 | 0 | 0 | 0 | 0 |
| $Y_2O_3$ | 0 | 0 | 0 | 0 | 0 | 0 | 0 | 0 |
| $Yb_2O_3$ | 0 | 0 | 0 | 0 | 0 | 0 | 0 | 0 |
| $Lu_2O_3$ | 0 | 0 | 0 | 0 | 0 | 0 | 0 | 0 |
| $Al_2O_3$ | 0 | 0 | 0 | 0.5 | 0 | 0 | 0 | 0 |
| $Sb_2O_3$ | 0.2 | 0.1 | 0.3 | 0.2 | 0.2 | 0.2 | 0.3 | 0.1 |
| SnO | 0 | 0 | 0 | 0 | 0 | 0 | 0 | 0 |

(continued)

| Example (wt%) | 9# | 10# | 11# | 12# | 13# | 14# | 15# | 16# |
|---|---|---|---|---|---|---|---|---|
| $SnO_2$ | 0 | 0 | 0 | 0 | 0 | 0 | 0 | 0 |
| $CeO_2$ | 0 | 0 | 0 | 0 | 0 | 0 | 0 | 0 |
| Total | 100 | 100 | 100 | 100 | 100 | 100 | 100 | 100 |
| $B_2O_3/SiO_2$ | 0.985 | 0.892 | 0.683 | 0.634 | 0.637 | 0.584 | 0.722 | 0.522 |
| $CaO/ZrO_2$ | 0.945 | 0.733 | 0.368 | 0.507 | 1 | 0.167 | 0.363 | 0.535 |
| $Nb_2O_5/B_2O_3$ | 0.519 | 0.522 | 0.73 | 0.962 | 0.97 | 0.543 | 0.535 | 0.545 |
| $(Li_2O+Na_2O+K_2O)/B_2O_3$ | 0.827 | 0.46 | 0.486 | 0.571 | 0.44 | 0.357 | 0.319 | 0.63 |
| $(Nb_2O_5+Na_2O+BaO)/B_2O_3$ | 1.104 | 0.882 | 1.05 | 1.386 | 1.306 | 0.865 | 0.815 | 1.047 |
| $B_2O_3/(Nb_2O_5+ZrO_2)$ | 1.368 | 1.193 | 0.804 | 0.758 | 0.892 | 0.895 | 0.977 | 1.05 |
| $CaO/K_2O$ | 0.693 | 2.423 | 1.273 | 1.583 | 2.059 | 2.75 | 4.5 | 3.538 |
| $(CaO+K_2O)/SiO_2$ | 0.481 | 0.292 | 0.231 | 0.187 | 0.143 | 0.076 | 0.156 | 0.146 |
| $<SiO_2+BaO)/B_2O_3$ | 1.081 | 1.143 | 1.482 | 1.61 | 1.591 | 1.726 | 1.406 | 1.934 |
| nd | 1.5845 | 1.6047 | 1.6275 | 1.6324 | 1.6164 | 1.6148 | 1.6205 | 1.6074 |
| Vd | 46.22 | 45.34 | 41.25 | 42.14 | 44.35 | 43.65 | 44.75 | 45.12 |
| $\lambda_{80}$ (nm) | 357 | 360 | 362 | 370 | 375 | 368 | 362 | 355 |
| $\lambda_5$ (nm) | 325 | 330 | 331 | 338 | 340 | 336 | 330 | 326 |
| $T_g$ (°C) | 532 | 531 | 536 | 542 | 540 | 537 | 530 | 536 |
| $\rho$ (g/cm$^3$) | 2.76 | 2.73 | 2.74 | 2.76 | 2.75 | 2.80 | 2.82 | 2.81 |
| CR | Class 1 | Class 1 | Class 1 | Class 1 | Class 1 | Class 1 | Class 1 | Class 1 |
| FA | 107 | 106 | 93 | 95 | 94 | 92 | 98 | 90 |
| $\alpha_{100}/300°C < \times 10^{-7}/K)$ | 85 | 79 | 83 | 86 | 88 | 80 | 77 | 83 |
| $H_K$ ($\times 10^7 Pa$) | 510 | 521 | 509 | 510 | 507 | 506 | 525 | 505 |
| $P_{g,F}$ | 0.5640 | 0.5633 | 0.5644 | 0.5655 | 0.5642 | 0.5632 | 0.5628 | 0.5643 |
| $\Delta P_{g,F}$ | -0.0056 | -0.0065 | -0.0075 | -0.0056 | -0.0052 | -0.0081 | -0.0078 | -0.0068 |

Table 4.

| Example (wt%) | 17# | 18# | 19# | 20# | 21# | 22# | 23# | 24# |
|---|---|---|---|---|---|---|---|---|
| $SiO_2$ | 27.5 | 35.2 | 33.7 | 32.5 | 33.5 | 32.2 | 30.5 | 34.2 |
| $B_2O_3$ | 24.6 | 23.9 | 23.3 | 22.8 | 24.8 | 34.0 | 31.3 | 24.5 |
| $Nb_2O_5$ | 16.2 | 14.5 | 15.2 | 14.7 | 12.3 | 11.5 | 18.2 | 16.6 |
| $ZrO_2$ | 9.5 | 10.2 | 11.7 | 14.4 | 10.2 | 7.4 | 8.5 | 10.3 |
| MgO | 0 | 1.5 | 0 | 0 | 0 | 0 | 0 | 0 |
| CaO | 3.3 | 2.4 | 1.8 | 4.1 | 5.5 | 2.5 | 2.3 | 3.8 |
| SrO | 1.0 | 0 | 0 | 0 | 0 | 0 | 0 | 0 |
| BaO | 0.8 | 1.0 | 1.5 | 0.6 | 1.5 | 0.8 | 0.4 | 0.5 |
| $Li_2O$ | 3.2 | 0.4 | 0.5 | 0.8 | 1.4 | 3.5 | 1.0 | 0.5 |
| $Na_2O$ | 9.4 | 8.2 | 7.4 | 6.5 | 7.3 | 5.4 | 5.6 | 6.5 |
| $K_2O$ | 2.3 | 2.5 | 2.7 | 3.4 | 3.5 | 2.6 | 2.1 | 3.0 |
| $WO_3$ | 0 | 0 | 0 | 0 | 0 | 0 | 0 | 0 |

(continued)

| Example (wt%) | 17# | 18# | 19# | 20# | 21# | 22# | 23# | 24# |
|---|---|---|---|---|---|---|---|---|
| $Ta_2O_5$ | 0 | 0 | 0 | 0 | 0 | 0 | 0 | 0 |
| $GeO_2$ | 0 | 0 | 0 | 0 | 0 | 0 | 0 | 0 |
| $TiO_2$ | 0 | 0 | 0 | 0 | 0 | 0 | 0 | 0 |
| ZnO | 1.0 | 0 | 2.0 | 0 | 0 | 0 | 0 | 0 |
| $La_2O_3$ | 0 | 0 | 0 | 0 | 0 | 0 | 0 | 0 |
| $Gd_2O_3$ | 0 | 0 | 0 | 0 | 0 | 0 | 0 | 0 |
| $Y_2O_3$ | 0 | 0 | 0 | 0 | 0 | 0 | 0 | 0 |
| $Yb_2O_3$ | 0 | 0 | 0 | 0 | 0 | 0 | 0 | 0 |
| $Lu_2O_3$ | 0 | 0 | 0 | 0 | 0 | 0 | 0 | 0 |
| $Al_2O_3$ | 1.0 | 0 | 0 | 0 | 0 | 0 | 0 | 0 |
| $Sb_2O_3$ | 0.2 | 0.2 | 0.2 | 0.2 | 0 | 0.1 | 0.1 | 0.1 |
| SnO | 0 | 0 | 0 | 0 | 0 | 0 | 0 | 0 |
| $SnO_2$ | 0 | 0 | 0 | 0 | 0 | 0 | 0 | 0 |
| $CeO_2$ | 0 | 0 | 0 | 0 | 0 | 0 | 0 | 0 |
| Total | 100 | 100 | 100 | 100 | 100 | 100 | 100 | 100 |
| $B_2O_3/SiO_2$ | 0.895 | 0.679 | 0.691 | 0.702 | 0.74 | 1.056 | 1.026 | 0.716 |
| $CaO/ZrO_2$ | 0.347 | 0.235 | 0.154 | 0.285 | 0.539 | 0.338 | 0.271 | 0.369 |
| $Nb_2O_5/B_2O_3$ | 0.659 | 0.607 | 0.652 | 0.645 | 0.496 | 0.338 | 0.581 | 0.678 |
| $(Li_2O+Na_2O+K_2O)/B_2O_3$ | 0.606 | 0.464 | 0.455 | 0.469 | 0.492 | 0.338 | 0.278 | 0.408 |
| $(Nb_2O_5+Na_2O+BaO)/B_2O_3$ | 1.073 | 0.992 | 1.034 | 0.956 | 0.851 | 0.521 | 0.773 | 0.963 |
| $B_2O_3/(Nb_2O_5+ZrO_2)$ | 0.957 | 0.968 | 0.866 | 0.784 | 1.102 | 1.799 | 1.172 | 0.911 |
| $CaO/K_2O$ | 1.435 | 0.96 | 0.667 | 1.206 | 1.571 | 0.962 | 1.095 | 1.267 |
| $(CaO+K_2O)/SiO_2$ | 0.204 | 0.139 | 0.134 | 0.231 | 0.269 | 0.158 | 0.144 | 0.199 |
| $(SiO_2+BaO)/B_2O_3$ | 1.15 | 1.515 | 1.511 | 1.452 | 1.411 | 0.971 | 0.987 | 1.416 |
| $n_d$ | 1.6134 | 1.6152 | 1.6206 | 1.6483 | 1.5935 | 1.5868 | 1.6275 | 1.6325 |
| $v_d$ | 44.18 | 44.67 | 43.75 | 40.52 | 45.07 | 46.27 | 43.74 | 42.25 |
| $\lambda_{80}$ (nm) | 360 | 357 | 358 | 361 | 362 | 363 | 361 | 360 |
| (nm) | 331 | 330 | 325 | 330 | 330 | 331 | 327 | 326 |
| $T_g$ (°C) | 530 | 535 | 537 | 529 | 531 | 530 | 532 | 532 |
| $\rho$ (g/cm$^3$) | 2.76 | 2.75 | 2.73 | 2.79 | 2.74 | 2.85 | 2.75 | 2.73 |
| CR | Class 1 | Class 1 | Class 1 | Class 1 | Class 1 | Class 1 | Class 1 | Class 1 |
| FA | 104 | 94 | 93 | 100 | 102 | 114 | 112 | 102 |
| $\alpha_{100}$/300°C <$\times10^{-7}$/K) | 82 | 82 | 84 | 81 | 74 | 92 | 73 | 82 |
| $H_K$ ($\times10^7$Pa) | 518 | 506 | 507 | 515 | 524 | 517 | 520 | 516 |
| $P_{g,F}$ | 0.5637 | 0.5645 | 0.5652 | 0.5643 | 0.5627 | 0.5642 | 0.5626 | 0.5635 |
| $\Delta P_{g,F}$ | -0.0072 | -0.0073 | -0.0072 | -0.0082 | -0.0073 | -0.0060 | -0.0065 | -0.0071 |

<Examples of Glass Preform >

Preforms of various lenses and prisms such as concave meniscus lenses, convex meniscus lenses, biconvex lenses, biconcave lenses, planoconvex lenses, and planoconcave lenses were manufactured from the glass obtained from examples 1 to 24# of optical glass by the method such as abrasive machining, hot pressing molding, precision stamping, and other pressing molding methods.

< Examples of Optical Element >

The preforms obtained in the above examples of glass preform were annealed to reduce the internal stress of the glass and fine-tune the optical properties such as the refractive index to the desired values.

Then, the preforms were milled or grinded to prepare lenses and prisms such as concave meniscus lens, convex meniscus lens, biconvex lens, biconcave lens, planoconvex lens, and planoconcave lens. An antireflection film can be coated on the surfaces of the obtained optical elements.

<Examples of Optical Instrument >

One or more optical elements obtained in the above examples of optical element formed an optical component or assembly according to an optical design, which can be used in, for example, imaging devices, sensors, microscopes, medical technology, digital projection, communications, optical communication technology/information transmission, optics/lighting in the automotive field, lithography technology, excimer lasers, wafers, computer chips, and integrated circuits and electronic devices including such circuits and chips.

**Claims**

1. An optical glass, **characterized by** comprising the following components in weight percentage: $SiO_2$: 20-45%; $B_2O_3$: 18-38%; $Nb_2O_5$: 5-25%; $ZrO_2$: 2-20%; and $Na_2O$: 1-15%.

2. The optical glass of claim 1, **characterized by** further comprising the following components in weight percentage: MgO: 0-5%; and/or CaO: 0-10%; and/or SrO: 0-5%; and/or BaO: 0-5%; and/or $Liz_O$: 0-5%; and/or $KzO$: 0-10%; and/or $WO_3$: 0-5%; and/or $Ta_2O_5$: 0-12%; and/or $TiO_2$: 0-5%; and/or ZnO: 0-5%; and/or $Ln_2O_3$: 0-5%; and/or $Al_2O_3$: 0-5%; and/or $GeO_2$: 0-5%; and/or a clarifying agent: 0-1%; wherein $Ln_2O_3$ is $La_2O_3$, $Gd_2O_3$, $Y_2O_3$, $Yb_2O_3$, $Lu_2O_3$, or any combination thereof, and the clarifying agent is $Sb_2O_3$, SnO, $SnOz$, $CeOz$, or any combination thereof.

3. An optical glass, **characterized by** consisting of the following components in weight percentage: $SiOz$: 20-45%; $B_2O_3$: 18-38%; $Nb_2O_5$: 5-25% ; $ZrOz$: 2-20%; $NazO$: 1-15%; MgO: 0-5%; CaO: 0-10%; SrO: 0-5%; BaO: 0-5%; $LizO$: 0-5%; $K_2O$: 0-10%; $WO_3$: 0-5%; $Ta_2O_5$: 0-12%; $TiO_2$: 0-5%; ZnO: 0-5%; $Ln_2O_3$: 0-5%; $Al_2O_3$: 0-5%; $GeO_2$: 0-5%; and a clarifying agent: 0-1%, wherein $Ln_2O_3$ is $La_2O_3$, $Gd_2O_3$, $Y_2O_3$, $Yb_2O_3$, $Lu_2O_3$, or any combination thereof, and the clarifying agent is $Sb_2O_3$, SnO, $SnOz$, $CeOz$, or any combination thereof.

4. The optical glass of any one of claims 1 to 3, **characterized by** having the following component ratio based on weight percentage: B2O3/SiO2: 0.51-1.6, preferably 0.6-1.5, more preferably 0.7-1.2, and further preferably 0.75-1.0.

5. The optical glass of any one of claims 1 to 3, **characterized by** having the following component ratio based on weight percentage: 0.15-1.0, preferably 0.2-0.9, more preferably 0.3-0.8, and further preferably 0.4-0.7.

6. The optical glass of any one of claims 1 to 3, **characterized by** having the following component ratio based on weight percentage: $B_2O_3/(Nb_2O_5+ZrO_2)$: 0.5-2.5, preferably 0.6-2.0, more preferably 0.7-1.5, and further preferably 0.8-1.3.

7. The optical glass of any one of claims 1 to 3, **characterized by** having the following component ratio based on weight percentage: $CaO/ZrO_2$: 2.0 or less, preferably 0.05-1.5, more preferably 0.1-1.0, and further preferably 0.1-0.8.

8. The optical glass of any one of claims 1 to 3, **characterized by** having the following component ratio based on weight percentage: $(SiO_2+BaO)/B_2O_3$: 0.6-2.0, preferably 0.7-1.8, more preferably 0.8-1.6, and further preferably 1.0-1.5.

9. The optical glass of any one of claims 1 to 3, **characterized by** having the following component ratio based on weight percentage: $(Nb_2O_5+Na_2O+BaO)/B_2O_3$: 0.5-1.5, preferably 0.65-0.95, more preferably 0.7-0.95, and further preferably 0.7-0.9.

10. The optical glass of any one of claims 1 to 3, **characterized by** having the following component ratio based on weight

percentage: CaO/K$_2$O: 0.1-5.0, preferably 0.3-3.0, more preferably 0.5-2.5, and further preferably 0.8-2.0.

11. The optical glass of any one of claims 1 to 3, **characterized by** having the following component ratio based on weight percentage: (CaO+K$_2$O)/SiO$_2$: 0.05-0.8, preferably 0.05-0.6, more preferably 0.1-0.5, and further preferably 0.1-0.4.

12. The optical glass of any one of claims 1 to 3, **characterized by** having the following component ratio based on weight percentage: (Li$_2$O+Na$_2$O+K$_2$O)/B$_2$O$_3$: 0.1-1.5, preferably 0.15-1.0, more preferably 0.2-0.9, and further preferably 0.25-0.7.

13. The optical glass of any one of claims 1 to 3, **characterized by** having the following components in weight percentage: SiOz: 25-40%, preferably 28-38%; and/or B$_2$O$_3$: 21-35%, preferably 23-30%; and/or NbaOs: 8-20%, preferably 10-18%; and/or ZrO$_2$: 5-18%, preferably 7-15%; and/or Na$_2$O: 3-13%, preferably 5-12%; and/or MgO: 0-2%, preferably 0-1%; and/or CaO: 0.5-8%, preferably 1-6%; and/or SrO: 0-2%, preferably 0-1%; and/or BaO: 0-3%, preferably 0-2%; and/or LizO: 0-3%, preferably 0-2%; and/or KzO: 0.5-8%, preferably 1-6%; and/or WO$_3$: 0-3%, preferably 0-1%; and/or Ta$_2$O$_5$: 0-5%, preferably 0-1%; and/or TiO$_2$: 0-1%; and/or ZnO: 0-3%, preferably 0-1%; and/or Ln$_2$O$_3$: 0-3%, preferably 0-1%; and/or Al$_2$O$_3$: 0-3%, preferably 0-1%; and/or GeO$_2$: 0-3%, preferably 0-1%; and/or the clarifying agent: 0-0.8%, preferably 0-0.5%; wherein Ln$_2$O$_3$ is La$_2$O$_3$, Gd$_2$O$_3$, Y$_2$O$_3$, Yb$_2$O$_3$, Lu$_2$O$_3$, or any combination thereof, and the clarifying agent is Sb$_2$O$_3$, SnO, SnOz, CeOz, or any combination thereof.

14. The optical glass of any one of claims 1 to 3, **characterized by** being free of the following components: TiOz; and/or WO$_3$; and/or Ta$_2$O$_5$; and/or GeOz; and/or ZnO; and/or Ln$_2$O$_3$; and/or Al$_2$O$_3$; wherein Ln$_2$O$_3$ is La$_2$O$_3$, Gd$_2$O$_3$, Y$_2$O$_3$, Yb$_2$O$_3$, Lu$_2$O$_3$, or any combination thereof.

15. The optical glass of any one of claims 1 to 3, **characterized by** having a refractive index n$_d$ of 1.56-1.66, preferably 1.58-1.65, more preferably 1.60-1.64, and/or an Abbe number v$_d$ of 40-48, preferably 41-47, more preferably 42-46.

16. The optical glass of any one of claims 1 to 3, **characterized by** having a relative partial dispersion P$_{g,F}$ of 0.7000 or less, preferably 0.6500 or less, more preferably 0.6000 or less, and/or a relative partial dispersion deviation $\Delta$P$_{g,F}$ of -0.0040 or less, preferably -0.0050 or less, more preferably -0.0060 or less, and further preferably -0.0065 or less.

17. The optical glass of any one of claims 1 to 3, **characterized by** having a density $\rho$ of 3.0 g/cm$^3$ or less, preferably 2.90 g/cm$^3$ or less, more preferably 2.85 g/cm$^3$ or less; and/or a thermal expansion coefficient $\alpha_{100}$/300°C of 95×10$^{-7}$/K or less, preferably 90×10$^{-7}$/K or less, more preferably 85×10$^{-7}$/K or less; and/or a transition temperature T$_g$ of 560°C or less, preferably 550°C or less, more preferably 540°C or less; and/or $\lambda_{80}$ of 390 nm or less, preferably 380 nm or less, more preferably 370 nm or less; and/or $\lambda_5$ of 350 nm or less, preferably 340 nm or less, more preferably 330 nm or less; and/or a climate resistance CR of class 2 or higher, preferably class 1; and/or a Knoop hardness H$_K$ of 450×10$^7$ Pa or greater, preferably 480×10$^7$ Pa or greater, more preferably 500×10$^7$ Pa or greater; and/or an abrasiveness F$_A$ of 80-130, preferably 90-120, more preferably 95-115.

18. A glass preform manufactured from the optical glass of any one of claims 1 to 17.

19. A optical element manufactured from the optical glass of any one of claims 1 to 17 or the glass preform of claim 18.

20. An optical instrument comprising the optical glass of any one of claims 1 to 17 and/or the optical element of claim 19.

## INTERNATIONAL SEARCH REPORT

| | International application No. |
|---|---|
| | **PCT/CN2023/099852** |

**A. CLASSIFICATION OF SUBJECT MATTER**

C03C3/068(2006.01)i; C03C3/064(2006.01)i; C03C4/00(2006.01)i

According to International Patent Classification (IPC) or to both national classification and IPC

**B. FIELDS SEARCHED**

Minimum documentation searched (classification system followed by classification symbols)

C03C

Documentation searched other than minimum documentation to the extent that such documents are included in the fields searched

Electronic data base consulted during the international search (name of data base and, where practicable, search terms used)

CNTXT; VEN; ENTXT; CNABS; CNKI; ISI: 玻璃, 光学, 组合物, 质量, 氧化硅, 氧化硼, 氧化铌, 氧化锆, 氧化钠, SiO2, B2O3, Nb2O5, ZrO2, Na2O, glass, optical, composite, weight, silicon oxide, boron oxide, niobium oxide, zirconium oxide, sodium oxide

**C. DOCUMENTS CONSIDERED TO BE RELEVANT**

| Category* | Citation of document, with indication, where appropriate, of the relevant passages | Relevant to claim No. |
|---|---|---|
| X | JP 2016222511 A (HIKARI GLASS CO., LTD.) 28 December 2016 (2016-12-28) claims 1 and 3, and table 1, embodiment 3 | 1-20 |
| X | US 2003013595 A1 (OHARA K.K.) 16 January 2003 (2003-01-16) claims 1-4, and embodiment 1 | 1-20 |
| X | US 5858898 A (OHARA K.K.) 12 January 1999 (1999-01-12) claims 1-2 | 1-20 |
| A | CN 112142321 A (CDGM GLASS CO., LTD.) 29 December 2020 (2020-12-29) entire document | 1-20 |
| A | JP 2015193515 A (OHARA K.K.) 05 November 2015 (2015-11-05) entire document | 1-20 |
| A | JP 2016088758 A (OHARA K.K.) 23 May 2016 (2016-05-23) entire document | 1-20 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **18 September 2023** | **20 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/099852**

| Patent document cited in search report | | | Publication date (day/month/year) | Patent family member(s) | | | Publication date (day/month/year) |
|---|---|---|---|---|---|---|---|
| JP | 2016222511 | A | 28 December 2016 | JP | 6573781 | B2 | 11 September 2019 |
| US | 2003013595 | A1 | 16 January 2003 | JP | 2003054983 | A | 26 February 2003 |
| | | | | JP | 4034589 | B2 | 16 January 2008 |
| | | | | US | 6703333 | B2 | 09 March 2004 |
| US | 5858898 | A | 12 January 1999 | JPH | 10130033 | A | 19 May 1998 |
| | | | | JP | 3302892 | B2 | 15 July 2002 |
| CN | 112142321 | A | 29 December 2020 | | None | | |
| JP | 2015193515 | A | 05 November 2015 | JP | 6860268 | B2 | 14 April 2021 |
| JP | 2016088758 | A | 23 May 2016 | TW | 201620847 | A | 16 June 2016 |
| | | | | JP | 6727692 | B2 | 22 July 2020 |
| | | | | WO | 2016067921 | A1 | 06 May 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 103466936 A